# EUROPÄISCHE PATENTANMELDUNG

(11) **EP 3 176 696 A1**
(43) Veröffentlichungstag der Anmeldung: **07.06.2017**
(21) Anmeldenummer: 16201408.8
(22) Anmeldetag: 30.11.2016
(51) Int. Cl.: G06F 9/48

(54) **VERFAHREN ZUR REALISIERUNG UND ZUM AUSFÜHREN EINER UMFANGREICHEN ECHTZEITCOMPUTERANWENDUNG**

(30) Priorität: 02.12.2015 AT 510382015
(71) Anmelder: Fts Computertechnik Gmbh, 1040 Wien (AT)
(72) Erfinder: Kopetz, Hermann, 2500 Baden (AT); POLEDNA, Stefan, 3400 Klosterneuburg (AT)
(74) Vertreter: Patentanwaltskanzlei Matschnig & Forsthuber OG

(57) **Zusammenfassung**

Die Erfindung betrifft ein Verfahren zum Ausführen einer Echtzeitcomputeranwendung, insbesondere einer umfangreichen Echtzeitcomputeranwendung, wobei eine Beschreibung von Funktionen bzw. der Funktionen der Echtzeitcomputeranwendung in einer Anwendungssoftware enthalten ist, oder zum Ausführen einer Anwendungssoftware, welche Anwendungssoftware eine Beschreibung von Funktionen bzw. der Funktionen der Echtzeitcomputeranwendung, insbesondere der umfangreichen Echtzeitcomputeranwendung, enthält, auf einem verteilten Echtzeit-Computersystem, welches Echtzeit-Computersystem eine Vielzahl von Sensoren, Aktuatoren, Knotenrechnern und Verteilereinheiten umfasst, und wobei die Sensoren, Aktuatoren, Knotenrechner und Verteilereinheiten Zugriff auf eine globale Zeit haben. Es ist vorgesehen, dass die Anwendungssoftware in eine Anzahl von Echtzeitsoftwarekomponenten EZSWK, insbesondere in mehrere Echtzeitsoftwarekomponenten EZSWK, unterteilt ist, wobei bei der Ausführung der Echtzeitcomputeranwendung bzw. der Anwendungssoftware die EZSWK mittels zeitgesteuerter Nachrichten Informationen austauschen können, und wobei jeder EZSWK eine Time-Triggered Virtual Machine TTVM zugeteilt ist, wobei von einem auf einem Knotenrechner laufenden Betriebssystem während eines Service Intervalls SI einer auf diesem Knotenrechner realisierten TTVM der geschützte Zugriff auf die dieser TTVM zugewiesenen Netzwerkressourcen und Speicherressourcen des Knotenrechners ermöglicht wird, und wobei während des SI der TTVM von dem Betriebssystem des Knotenrechners eine definierte Rechenleistung zur Abarbeitung der in der TTVM laufenden EZSWK derart zugeteilt wird, dass die EZSWK vor dem Ende des SI ein Ergebnis bereit stellen kann.

## Beschreibung

Die Erfindung betrifft ein Verfahren zur Realisierung einer Echtzeitcomputeranwendung, insbesondere einer umfangreichen Echtzeitcomputeranwendung, auf einem verteilten Echtzeit-Computersystem, welches Echtzeit-Computersystem eine Vielzahl von Sensoren, Aktuatoren, Knotenrechnern und Verteilereinheiten umfasst, und wobei die Sensoren, Aktuatoren, Knotenrechner und Verteilereinheiten Zugriff auf eine globale Zeit haben, und wobei eine Beschreibung von Funktionen, insbesondere der Funktionen der Echtzeitcomputeranwendung, insbesondere der umfangreichen Echtzeitcomputeranwendung, in einer Anwendungssoftware enthalten ist.

Außerdem betrifft die Erfindung ein Verfahren zum Ausführen einer Echtzeitcomputeranwendung, insbesondere einer umfangreichen Echtzeitcomputeranwendung, wobei eine Beschreibung von Funktionen bzw. der Funktionen der Echtzeitcomputeranwendung in einer Anwendungssoftware enthalten ist, oder zum Ausführen einer Anwendungssoftware, welche Anwendungssoftware eine Beschreibung von Funktionen bzw. der Funktionen der Echtzeitcomputeranwendung, insbesondere der umfangreichen Echtzeitcomputeranwendung, enthält, auf einem verteilten Echtzeit-Computersystem, welches Echtzeit-Computersystem eine Vielzahl von Sensoren, Aktuatoren, Knotenrechnern und Verteilereinheiten umfasst, und wobei die Sensoren, Aktuatoren, Knotenrechner und Verteilereinheiten Zugriff auf eine globale Zeit haben.

Weiters betrifft die Erfindung einen Knotenrechner für ein verteiltes Echtzeit-Computersystem, welches Echtzeit-Computersystem eine Vielzahl von Sensoren, Aktuatoren, Knotenrechnern und Verteilereinheiten umfasst, und wobei die Sensoren, Aktuatoren, Knotenrechner und Verteilereinheiten Zugriff auf eine globale Zeit haben, wobei auf dem Echtzeit-Computersystem eine Echtzeitcomputeranwendung, insbesondere eine umfangreiche Echtzeitcomputeranwendung, bzw. eine Anwendungssoftware ausgeführt wird, wobei eine Anwendungssoftware bzw. die Anwendungssoftware eine Beschreibung von Funktionen bzw. der Funktionen der Echtzeitcomputeranwendung enthält.

Außerdem betrifft die Erfindung ein verteiltes Echtzeit-Computersystem.

Ein *Cyber-Physical System* besteht aus einer physikalischen Anlage, die von einem vorzugsweise verteilten Echtzeitcomputersystem gesteuert wird. Die *physikalischen Prozesse* in der Anlage werden von *Rechenprozessen* in dem verteilten Echtzeitcomputersystem gesteuert.

Ein *verteiltes Echtzeitcomputersystem* besteht aus einer *Prozessperipherie* zur Beobachtung und Steuerung der physikalischen Prozesse in der Anlage, einer *Vielzahl von Knotenrechnern mit* Anwendungssoftware zur Verarbeitung der anfallenden Daten, und einem *Kommunikationssystem* mit Kommunikationskanälen und Verteilereinheiten zum Transport von Echtzeitnachrichten zwischen der Prozessperipherie und den Knotenrechnern.

Die Prozessperipherie besteht aus Sensoren, insbesondere *intelligenten Sensoren* und Aktuatoren, insbesondere *intelligenten Aktuatoren.*

Ein *intelligenter Sensor* ist ein Gerät, das die zu erfassenden Prozessdaten zuerst in ein Bitmuster wandelt. Dieses Bitmuster wird im Rahmen der *Vorverarbeitung* auf Plausibilität überprüft und in eine physikalische Messgröße umgeformt. Anschließend wird die Messgröße in einer Nachricht an Empfänger, insbesondere die interessierten Empfänger, gesendet.

Ein *intelligenter Aktuator* ist ein Gerät, das einen in einer Nachricht empfangenen Sollwert zum vorgegebenen Zeitpunkt in eine physikalische Größe wandelt und damit den physikalischen Prozess in der physikalischen Anlage beeinflusst.

Entsprechend [3], S. 265 wird in der Phase des Architekturentwurfs ein EDV System in eine Anzahl von weitgehend unabhängigen Komponenten unterteilt, wobei die Schnittstellen der Komponenten im Wertebereich und Zeitbereich präzise spezifiziert werden und die Kommunikation zwischen den Komponenten festgelegt wird.

Wir bezeichnen eine Echtzeitcomputeranwendung als *umfangreich,* wenn im Rahmen des Architekturentwurfs mindestens drei weitgehend unabhängige Komponenten spezifiziert werden.

Es ist eine Aufgabe der Erfindung, eine Lösung dafür anzugeben, wie in einem, insbesondere umfangreichen, Echtzeitcomputersystem Hardware/Software Schnittstellen eingeführt werden können, die einerseits eine systematische komponentenbasierte Systementwicklung ermöglichen und andererseits eine Laufzeitumgebung realisiert werden kann, die die geforderte Echtzeitbedingungen erfüllt und die dynamisch während des laufenden Betriebes geändert und erweitert werden kann.

Diese Aufgabe wird mit den eingangs genannten Verfahren sowie Knotenrechner dadurch gelöst, dass erfindungsgemäß
die Anwendungssoftware in eine Anzahl von Echtzeitsoftwarekomponenten EZSWK, insbesondere in mehrere Echtzeitsoftwarekomponenten EZSWK, unterteilt wird, wobei bei einer Ausführung der Anwendungssoftware bzw. der Echtzeitcomputeranwendung die EZSWK mittels zeitgesteuerter Nachrichten Informationen austauschen können, und wobei jeder EZSWK eine Time-Triggered Virtual Machine TTVM zugeteilt wird, wobei von einem auf einem Knotenrechner laufenden Betriebssystem während eines periodischen Service Intervalls SI, dessen a priori festgelegte Beginn- und Endzeitpunkte mit der globalen Zeit synchronisiert sind, einer auf diesem Knotenrechner realisierten TTVM der geschützte Zugriff auf die dieser TTVM zugewiesenen Netzwerkressourcen und Speicherressourcen des Knotenrechners ermöglicht wird, und wobei während des SI der TTVM von dem Betriebssystem des Knotenrechners eine definierte Rechenleistung zur Abarbeitung der in der TTVM laufenden EZSWK derart zugeteilt wird, dass die EZSWK vor dem Ende des SI ein Ergebnis bereit stellen kann.

Bei einem erfindungsgemäßen verteilten Echtzeit-Kommunikationssystem ist zumindest ein Knotenrechner entsprechend der Erfindung ausgebildet, vorzugsweise sind mehrere oder alle Knotenrechner entsprechend ausgebildet.

Entsprechend der vorliegenden Erfindung ist vorgesehen, dass die zeitrichtige Ausführung einer *Echtzeitsoftwarekomponente (EZSWK)* in einer *virtuellen zeitgesteuerten Maschine* (*timetriggered virtual machine TTVM*) erfolgt, wobei die TTVM vom Betriebssystem eines Knotenrechners *emuliert* wird.

Eine *Anwendungssoftware,* welche die Echtzeitcomputeranwendung beschreibt, besteht aus einer Anzahl von Echtzeitsoftwarekomponenten (EZSWK). Unter einer *Echtzeitsoftwarekomponente* wird eine Komponente eines, insbesondere umfangreichen, *echtzeitfähigen Anwendersoftwaresystems* verstanden, die *unter der Voraussetzung einer geeigneten Laufzeitumgebung* innerhalb eines vorgegebenen Echtzeitintervalls aus den bereitgestellten Eingabedaten und dem *inneren Zustand* der EZSWK die *intendierten Ausgabedaten* und einen *neuen inneren Zustand* der EZSWK errechnet. Zum Begriff des Zustandes bzw. inneren Zustandes siehe [3], Kapitel 4.2, insbesondere 4.2.1.

Ein verteiltes Echtzeitcomputersystem ist *zeitgesteuert,* wenn der periodisch wiederkehrende Zeitpunkt, zu dem eine Nachricht von einem Sender zu senden ist, vom Fortschreiten der globalen Zeit bestimmt wird.

Ein zeitgesteuertes Echtzeitcomputersystem setzt voraus, dass die Sensoren, z.B. die intelligenten Sensoren und die Aktuatoren, z.B. die intelligenten Aktuatoren, die Knotenrechner und die Verteilereinheiten Zugriff auf eine *globale Zeit* bekannter Genauigkeit haben.

In einem zeitgesteuerten Echtzeitcomputersystem erfolgt eine strikte Trennung von *Datenverarbeitung* und *Datentransport.*

Die *Datenverarbeitung* erfolgt durch *Echtzeitsoftwarekomponenten (EZSWK),* die in Knotenrechnern ausgeführt werden.

Die Datenverarbeitung erfolgt durch Echtzeitsoftwarekomponenten die in Knotenrechnern während periodische Echtzeitintervallen, deren wiederkehrende Anfangszeitpunkte und Endzeitpunkte auf der globalen Zeitachse spezifiziert sind, ausgeführt werden.

In einem zeitgesteuerten verteilten Echtzeitcomputersystem erfolgt der Datentransport zur Bereitstellung der Eingabedaten einer EZSWK und zur Weiterleitung der Ergebnisse einer EZSWK, vorzugsweise über *zeitgesteuerte periodische Zustandsnachrichten,* deren Sendezeitpunkte und Empfangszeitpunkte in *a priori* erstellten Zeitplänen des Kommunikationssystems enthalten sind.

Vorzugsweise ist das das Zeitintervall zwischen dem Sendezeitpunkt und dem Empfangszeitpunkt einer Nachricht mindestens so lange gewählt, dass das vorliegende Kommunikationssystem, insbesondere Echtzeitkommunikationssystem, in diesem Zeitintervall die spezifizierte Echtzeitnachricht vom Sender zum Empfänger transportieren kann. Es ist vorteilhaft, wenn dieses Zeitintervall länger ist als dieses Minimalintervall, um die Flexibilität des Kommunikationssystems zu erhöhen.

Die *Zugriffssemantik* zu den Daten einer *periodischen Zustandsnachricht* entspricht weitgehend der Zugriffssemantik zu einer Variablen in einer Programmiersprache. Beim Lesen wird der aktuelle Wert der Zustandsnachricht übernommen. Da beim Eintreffen einer neuen Version einer Zustandsnachricht die alte Version überschrieben wird, gibt es bei der Kommunikation mittels Zustandsnachrichten keine Warteschlangen. Eine genaue Beschreibung der Zugriffssemantik der Zustandsnachrichten findet sich in [3].

Während der Fortgang der physikalischen Prozesse in der Anlage, der *Anlagenprozesse,* vom Fortschreiten der physikalischen Zeit abhängt, wird die *Ausführungsdauer einer Echtzeitsoftwarekomponente* (eines *Computerprozesses)* von der Geschwindigkeit der Programmabarbeitung im Knotenrechner bestimmt.

In einem *Cyber-Physical System muss der Fortschritt* der physikalischen Prozesse in der Anlage mit den in den Knotenrechnern ablaufenden Computerprozessen synchronisiert werden.

Eine Methode zur Synchronisation der *Anlagenprozesse* mit den *Computerprozessen* basiert auf der Einführung von *äquidistanten periodischen Synchronisationspunkten.* Es ist vorteilhaft, wenn an jedem Synchronisationspunkt der physikalische Prozess mittels aller verfügbaren Sensoren, insbesondere intelligenten Sensoren, *gleichzeitig* beobachtet wird. Die gleichzeitige Beobachtung aller Prozessdaten stellt sicher, dass zeitlich bedingte Änderungen im Prozessgeschehen nicht die zum Beobachtungszeitpunkt bestehenden Beziehungen zwischen den beobachteten Prozessdaten verfälschen.

Das zeitliche Intervall zwischen zwei aufeinanderfolgenden Synchronisationspunkten bezeichnet man als *Frame.* Die Dauer eines Frames wird von der Dynamik der physikalischen Prozesse in der Anlage bestimmt. Unter der Dynamik eines physikalischen Prozesses wird der Maximalwert der Ableitung einer den Prozess beschreibenden Variablen V nach der Zeit t verstanden.

In der Entwurfsphase eines Echtzeitcomputersystems ist die Dauer D eines Frames so zu wählen, dass selbst im Extremfall der höchsten Dynamik des physikalischen Prozesses die Änderung D . *Max* /*dV*/*dt* / einer kontinuierlichen Prozessvariablen innerhalb eines Frames keinen wesentlichen Einfluss auf die gestellte Aufgabe bewirkt.

Die Wahl der Dauer eines Frames soll am Beispiel eines *Airbags Auslösesystems* in einem Fahrzeug erklärt werden. Wenn sich ein Fahrzeug mit einer Geschwindigkeit von 30 m/sec (das sind 108 km/h) bewegt, so verändert sich seine Position in einem Zeitintervall von 1 msec um 3 cm. Wenn eine *Framedauer von 100 µsec* gewählt wird, so hat die Positionsänderung von 3 mm innerhalb eines Frames keinen wesentlichen Einfluss auf das Prozessgeschehen.

In einem großen Echtzeitcomputersystem kann eine Vielzahl von unterschiedlichen Framedauern auftreten. Es ist vorteilhaft, wenn jede Framedauer einer Zweierpotenz einer kleinsten Framedauer entspricht, was zu einer harmonischen Menge von Framedauern führt, deren Phasen synchronisiert werden können. Es kann auch vorteilhaft sein, wenn ein Element aus der Menge der Framedauern exakt der Dauer der physikalischen Sekunde entspricht.

In einem *strikt frame-basierten System* erfolgen während der Dauer eines Frames keine Eingaben von einem physikalischen Prozess an einen Computerprozess. In einem solchen *zeitgesteuerten verteilten Computersystem* gibt es nur *systemweit synchronisierte periodische Uhreninterrupts,* die den Beginn eines neuen Frames signalisieren. In einem strikt *framebasierten System* laufen die Computerprozesse während der Dauer eines Frames unbeeinflusst von den physikalischen Prozessen in der Anlage ab.

Vorteilhafte Ausgestaltungen der erfindungsgemäßen Verfahren, des erfindungsgemäßen Computersystems, insbesondere verteilten Echtzeit-Computersystems, sowie eines erfindungsgemäßen Knotenrechners, welche jeweils für sich allein oder in beliebiger Kombination realisiert sein können, sind im Folgenden aufgezählt:
- eine TTVM stellt am a priori festgelegten periodischen Beginnzeitpunkt eines SI die Eingabedaten einer EZSWK in Form von zeitgesteuerter Zustandsdaten im Datenbereich der EZSWK bereit und übernimmt am Ende des SI die Ausgabedaten der EZSWK in der Form von zeitgesteuerter Zustandsdaten aus dem Datenbereich der EZSWK;
- auf einem Knotenrechner werden gleichzeitig mehrere TTVM realisiert;
- in einem Echtzeitcomputersystem, insbesondere umfangreichen Echtzeitcomputersystem, werden eine Vielzahl von Frames mit unterschiedlichen Frame-Dauern realisiert;
- die Frame-Dauern entsprechen einer Zweierpotenz der kleinsten Frame-Dauer;
- das Betriebssystem eines Knotenrechners vergleicht die Zugriffsrechte einer TTVM mit den Zugriffsanforderungen der auf der TTVM laufenden EZSWK, um Security Fehler zu erkennen;
- ein Kommunikationssystem des Echtzeitcomputersystems oder ein Betriebssystem eines Knotenrechners deaktiviert zu einem a priori geplanten Umschaltzeitpunkt die laufende Version einer EZSWK und aktiviert eine neue Version einer EZSWK auf einer anderen TTVM und versorgt diese mit Kommunikationsdaten;
- zwei gleiche, d.h. identische, EZSWK laufen auf zwei unabhängigen fail-silent TTVM ab;
- drei gleiche, d.h. identische, EZSWK laufen auf drei unabhängigen TTVM ab und eine empfangende, d.h. drei Kopien einer Nachrichten empfangende, TTVM maskiert mittels *Majority Voting* fehlerhafte Nachrichten;
- ein oder mehrere Knotenrechner verfügen jeweils über zwei oder mehrere Prozessoren, wobei eine EZSWK auf zwei oder mehreren Prozessoren eines Knotenrechners parallel ausgeführt wird, wobei vorzugsweise die TTVM die EZSWK auf die zur Verfügung stehenden Prozessoren des Knotenrechners aufteilt, sodass die Rechenzeit für die EZSWK reduziert werden kann.

Im Folgenden wird die Erfindung an Hand der Zeichnung näher erläutert. In dieser zeigt
Fig. 1 eine typische Abfolge von Ereignissen innerhalb eines zeitgesteuerten Frames,
Fig. 2 beispielhaft die verteilte Computer-Hardware eines einfachen verteilten Echtzeitcomputersystems, und
Fig. 3 eine umfangreichere Hardwarekonfiguration eines verteilten Echtzeitcomputersystems.

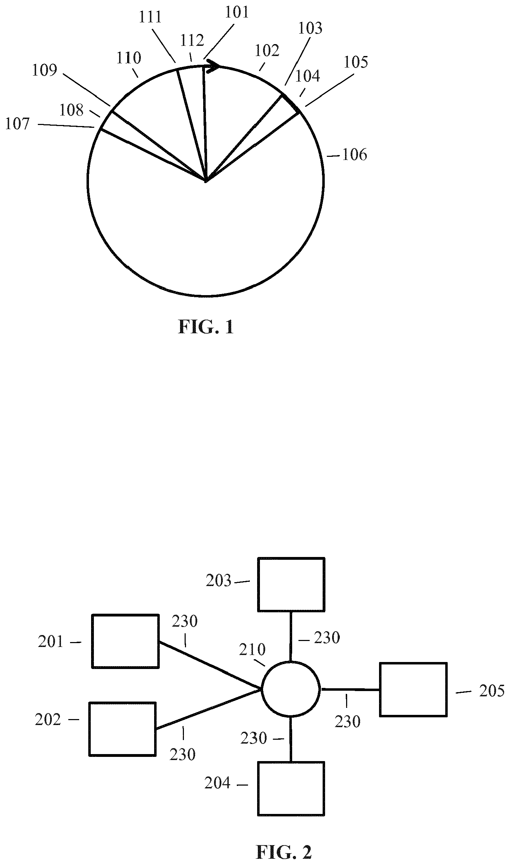

Fig. 1 zeigt eine typische Abfolge der Ereignisse innerhalb eines zeitgesteuerten Frames. Zum *Beobachtungszeitpunkt* **101,** dem Beginn eines Frames, der auch den *globalen Synchronisationszeitpunkt* markiert, wird von allen Sensoren gleichzeitig der physikalische Prozess beobachtet. Im Zeitintervall **102,** dem *Vorverarbeitungsintervall* werden die Sensordaten ausgelesen und vorverarbeitet. Zum Zeitpunkt **103,** dem *Lieferzeitpunkt* wird mit dem Senden der Nachricht, die die vorverarbeiteten Sensordaten enthält, begonnen. Nach dem im Zeitplan vorgegebenen Übertragungsintervall **104** trifft zum Zeitpunkt **105** die Nachricht im empfangenden Knotenrechner ein, der im Zeitintervall **106** die Sollwerte errechnet. Zum Zeitpunkt **107** beginnt dieser Knotenrechner die Nachricht mit den Sollwerten an den intelligenten Aktuator zu senden. Nach dem Übertragungszeitintervall **108** trifft diese Nachricht zum Zeitpunkt **109** bei einem, vorzugsweise intelligenten, Aktuator ein, der nach dem Verzögerungsintervall **110** zum Zeitpunkt **111** die Sollwerte der physikalischen Anlage übergibt.

Im Zeitintervall **112,** dem Intervall zwischen der Fertigstellung **111** der Berechnung in diesem Frame und dem Beginn des nächsten Frames **101** ist der innere Zustand des Systems eindeutig definiert.

In einem *strikt frame-basierten System* beobachten vorwiegend unterschiedliche Sensoren den physikalischen Prozess ausschließlich zu festgelegten global synchronisierten *Beobachtungszeitpunkten.* Vorzugsweise sind die *Beobachtungszeitpunkte* mit den Beginn-Zeitpunkten eines Frames synchronisiert.

Entsprechend der vorliegenden Erfindung ist im Allgemeinen, d.h. nicht auf die in den Figuren beschriebenen beispielhaften Ausführungsformen beschränkt, vorgesehen, dass die zeitrichtige Ausführung einer *Echtzeitsoftwarekomponente* (*EZSWK*) in einer *virtuellen zeitgesteuerten Maschine* (*time-triggered virtual machine TTVM)* erfolgt, wobei die TTVM vom Betriebssystem eines Knotenrechners *emuliert* wird.

Unter dem Begriff der *Emulation* wird in der Informatik die Nachahmung der Funktion eines Computers durch einen anderen Computer verstanden [1]. Unter dem Begriff der *Virtualisierung* [2] wird die Bildung einer *emulierten Serviceinheit* durch eine Softwareschicht eines in einer konkreten Hardwareumgebung ablaufenden nativen Betriebssystems verstanden. Mittels der Virtualisierung lassen sich *nicht-physische Computer Ressourcen,* wie *emulierte Hardware, emulierte Betriebssysteme, emulierte Datenspeicher* oder *emulierte Netzwerkressourcen* gestalten. Die Virtualisierung ermöglicht es, abstrakte Computer-Ressourcen mit festgelegten Leistungsmerkmalen ohne Bezugnahme auf eine konkrete physische Laufzeitumgebung zu bilden, etwa ein *emuliertes Betriebssystem* durch ein auf einer konkreten Hardware laufendes *nativen Betriebssystem.* Die Virtualisierung hat z.B. im Bereich des Cloud Computing eine große wirtschaftliche Bedeutung erlangt.

Eine *Time-Triggered Virtual Machine (TTVM)* ist eine *abstrakte Serviceeinheit,* die von dem in einem Knotenrechner laufenden nativen Betriebssystem *emulierte Computer Ressourcen* während eines *periodischen Echtzeitintervalls (dem Service-Intervall SI)* bereit gestellt bekommt, um die Echtzeit-Softwarekomponente (EZSWK), die der TTVM zugeteilt wurde, auszuführen.

Die Beginn-Zeitpunkte und die End-Zeitpunkte der periodischen Service-Intervalle SI werden im Rahmen des Systementwurfs auf der globalen Zeitachse spezifiziert und beziehen sich auf die Zeitpunkte des Empfangs der zeitgesteuerten Nachrichten mit den Eingabedaten und dem Senden der zeitgesteuerten Nachrichten mit den Ausgabedaten. Während des SI wird der TTVM von dem auf der konkreten Maschine laufenden Betriebssystem der geschützte Zugriff auf die der TTVM zugewiesenen Netzwerkressourcen und Speicherressourcen ermöglicht und es wird der TTVM eine definierte Rechenleistung zur Abarbeitung der in der TTVM laufenden EZSWK derart zugeteilt, dass von der EZSWK die intendierten Ausgabedaten vor dem Ende des SI bereit gestellt werden können.

In Fig. 1 entspricht das Zeitintervall **106** zwischen den Ereignissen **105** (Ankunft der Eingabedaten) und **107** (Beginn des Sendens der Ausgabedaten) dem SI Intervall, während dem die entsprechende EZSWK innerhalb eines Frames auf der TTVM ausgeführt wird.

Da die Zugriffssemantik zu den Kommunikationsdaten einer TTVM, das sind die Eingabedaten und Ausgabedaten der TTVM, der Zugriffssemantik von Variablen entspricht, kann die TTVM, die auf einer Komponente läuft, der EZSWK eine einheitliche Datenschnittstelle, die sowohl die Kommunikationsdaten wie auch die lokalen Daten umfasst, zur Verfügung stellen. Dadurch wird einerseits die Struktur der EZSWK wesentlich vereinfacht und andererseits wird die Flexibilität der Allokation der EZSWK zu Knotenrechner signifikant erhöht.

Im Rahmen der Konfiguration einer TTVM werden die Zugriffsrechte zu den Netzwerkressourcen und Speicherressourcen, speziell zu den Datenbereichen des Knotenrechners, präzise vorgegeben. Vom Betriebssystem werden die Zugriffsanforderungen der EZSWK mit diesen Zugriffsrechten der TTVM laufend verglichen, um Fehler, vor allem im Bereich der Security, erkennen zu können.

Die Kombination einer EZSWK mit einer TTVM bildet eine *Time-Triggered Service Unit (TTSU).* Während eine EZSWK ein Konstrukt darstellt, ist eine TTSU ein konkretes Ding mit beobachtbaren physikalischen Eigenschaften. Eine EZSWK kann *Errors* (Fehlzustände) beinhalten, jedoch nur eine TTSU kann *ausfallen* [3].

Die Zuordnung einer TTSU zu einem Knotenrechner kann dynamisch erfolgen, d.h. diese Zuordnung kann während des laufenden Betriebs geändert werden. Eine solche Änderung der Zuordnung erfordert die Installation einer entsprechenden TTVM auf einem neuen Knotenrechner sowie die Versorgung dieser TTVM mit den erforderlichen Eingabedaten durch die Änderung der Zeitpläne in den zeitgesteuerten Verteilereinheiten des Kommunikationssystems. Auf dieser neu installierten TTVM wird dann die entsprechende EZSWK exekutiert und die errechneten Ausgabedaten werden von dem entsprechend neu konfigurierten Kommunikationssystem zu den vorgesehen Empfängern, insbesondere den intelligenten Aktuatoren, transportiert.

Die dynamische Zuordnung von EZSWK zu TTVM unterstützt die *Implementierung von Fehlertoleranz,* die *Rekonfiguration* und die *Evolution* von umfangreichen Softwaresystemen. Eine solche dynamische Umschaltung wird unter Betrachtung der Fig. 2 beschrieben.

In Fig. 2 ist beispielhaft ein einfaches verteiltes Echtzeitcomputersystem dargestellt, in welchem *intelligente Sensoren* **201, 202** Daten einer physikalischen Anlage zu festgelegten global synchronisierten Beobachtungszeitpunkten erfassen und über Kommunikationskanäle **230** und eine Verteilereinheit **210** periodische zeitgesteuerte Nachrichten an Knotenrechner **203** und **204** senden. Im Knotenrechner **203** steht eine TTVM zur Verfügung, die die Ausführung einer EZSWK verwirklicht und somit eine TTSU darstellt, und welche die Ausgabedaten der EZSWK über die Verteilereinheit **210** an einen intelligenten Aktuator **205** sendet. Auf dem Knotenrechner **204** läuft in diesem Beispiel eine TTSU, die eine neue Version der EZSWK enthält. Zu einem a priori geplanten Umschaltzeitpunkt ersetzt die Verteilereinheit **210** die Ausgabedaten vom Knotenrechner **203** durch Ausgabedaten des Knotenrechners **204.** Damit wird ohne Unterbrechung des laufenden Betriebs eine neue Softwareversion installiert und aktiviert.

Erfindungsgemäß kann ein Knotenrechner mehrere TTVM mit gleichen oder unterschiedlichen Framedauern realisieren, das bedeutet, dass der Knotenrechner mehrere TTSUs realisiert. In einem solchen Knotenrechner ist es vorteilhaft, wenn sich die SIs der TTVMs nicht überlappen.

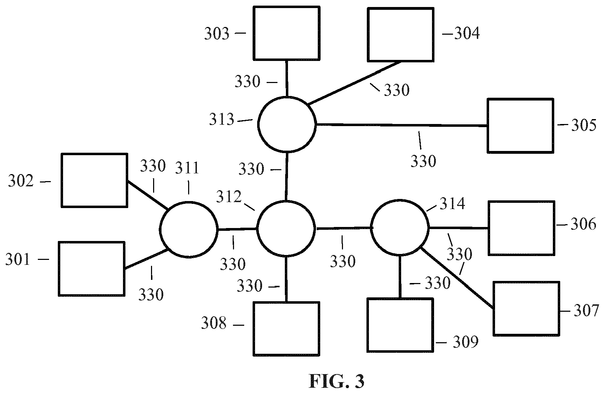

In Fig. 3 ist eine umfangreichere Hardwarekonfiguration als in Fig. 2 mit *intelligenten Sensoren* **301, 302, 303, 304,** *Knotenrechnern* **308, 309,** auf denen jeweils eine oder mehrere TTVM installiert sind, sowie den intelligenten Aktuatoren **305, 306, 307** abgebildet. Die intelligenten Sensoren, Aktuatoren und Knotenrechner tauschen über Kommunikationskanäle **330** und über Verteilereinheiten **312, 313, 314** zeitgesteuerte Echtzeitnachrichten aus.

Die intelligenten Sensoren **301, 302, 303** erfassen Daten, die auf der am Knotenrechner **308** installierten ersten TTVM, im Folgenden TTVM1, verarbeitet werden und die einen Sollwert für den intelligenten Aktuator **305** errechnet.

Die intelligenten Sensoren **301, 302, 304** erfassen Daten, die auf einer zweiten am Knotenrechner **308** installierten TTVM, im Folgenden TTVM2, verarbeitet werden und einen Sollwert für den intelligenten Aktuator **306** errechnet.

Die intelligenten Sensoren **302, 303, 304** erfassen Daten, die auf der am Knotenrechner **309** installierten dritten TTVM, im Folgenden TTVM3, verarbeitet werden und die einen Sollwert für den intelligenten Aktuator **307** errechnen.

In einer EZSWK werden die von den entfernten intelligenten Sensoren erfassten aktuellen Zustandsdaten genau so gelesen wie lokale Daten. Die Ausgangsdaten zu den entfernten Aktuatoren werden vom zeitgesteuerten Kommunikationssystem (Kommunikationskanäle und Verteilereinheiten) in die vorgesehenen Datenbereiche einer TTVM geschrieben und am Ende des SI vom zeitgesteuerten Kommunikationssystem zu den vorgesehen intelligenten Aktuatoren transportiert. Die Ausführung spezieller Eingabe- oder Ausgabe-Befehle in der Software einer EZSWK ist nicht erforderlich.

Wenn zwei gleiche EZSWK auf zwei unabhängigen *fail-silent* TTSU ablaufen, so kann der Empfänger den Ausfall eines TTSU tolerieren [3].

Wenn drei gleiche EZSWK auf drei unabhängigen TTSU ablaufen, so kann die empfangende TTSU mittels *Majority Voting* das Verhalten einer fehlerhaften TTSU maskieren [3].

In einem Echtzeitcomputersystem können unterschiedliche Versionen einer TTSU, z.B. eine aktuelle Betriebsversion und eine neue Version parallel, entweder auf einem Knotenrechner oder auf mehreren Knotenrechnern ablaufen. Vom zeitgesteuerten Kommunikationssystem können die Ergebnisse der neuen Version zu einem Komparator weitergeleitet werden, der die Ergebnisse der neuen Version mit den Ergebnisse der Betriebsversion vergleicht, um Fehler in der neuen Version zu erkennen. Wenn die neue Version ausreichend getestet ist, so kann sie wie in Fig. 2 beschrieben in den laufenden Betrieb integriert werden.

Die vorliegende Erfindung führt zu einer wesentlichen Vereinfachung und Flexibilisierung eines großen Echtzeitcomputersystems und ist daher von großer wirtschaftlicher Bedeutung.

### Zitierte Literatur:

[1] Duden. Emulation. URL: http://www.duden.de/suchen/dudenonline/emulation
[2] Wikipedia. Virtualisierung. URL: https://de.wikipedia.org/wiki/Virtualisierung_(Informatik)
[3] Kopetz, H. Real-Time Systems, Design Principles for Distributed Embedded Applications. Springer Verlag. 2011.

## Patentansprüche

1. Verfahren zur Realisierung einer Echtzeitcomputeranwendung, insbesondere einer umfangreichen Echtzeitcomputeranwendung, auf einem verteilten Echtzeit-Computersystem, welches Echtzeit-Computersystem eine Vielzahl von Sensoren, Aktuatoren, Knotenrechnern und Verteilereinheiten umfasst, und wobei die Sensoren, Aktuatoren, Knotenrechner und Verteilereinheiten Zugriff auf eine globale Zeit haben, und wobei eine Beschreibung von Funktionen, insbesondere der Funktionen der Echtzeitcomputeranwendung, insbesondere der umfangreichen Echtzeitcomputeranwendung, in einer Anwendungssoftware enthalten ist,
**dadurch gekennzeichnet, dass**
die Anwendungssoftware in eine Anzahl von Echtzeitsoftwarekomponenten EZSWK, insbesondere in mehrere Echtzeitsoftwarekomponenten EZSWK, unterteilt wird, wobei bei einer Ausführung der Anwendungssoftware bzw. der Echtzeitcomputeranwendung die EZSWK mittels zeitgesteuerter Nachrichten Informationen austauschen können, und wobei jeder EZSWK eine Time-Triggered Virtual Machine TTVM zugeteilt wird, wobei von einem auf einem Knotenrechner laufenden Betriebssystem während eines periodischen Service Intervalls SI, dessen a priori festgelegte Beginn- und Endzeitpunkte mit der globalen Zeit synchronisiert sind, einer auf diesem Knotenrechner realisierten TTVM der geschützte Zugriff auf die dieser TTVM zugewiesenen Netzwerkressourcen und Speicherressourcen des Knotenrechners ermöglicht wird, und wobei während des SI der TTVM von dem Betriebssystem des Knotenrechners eine definierte Rechenleistung zur Abarbeitung der in der TTVM laufenden EZSWK derart zugeteilt wird, dass die EZSWK vor dem Ende des SI ein Ergebnis bereit stellen kann.

2. Verfahren zum Ausführen einer Echtzeitcomputeranwendung, insbesondere einer umfangreichen Echtzeitcomputeranwendung, wobei eine Beschreibung von Funktionen bzw. der Funktionen der Echtzeitcomputeranwendung in einer Anwendungssoftware enthalten ist, oder zum Ausführen einer Anwendungssoftware, welche Anwendungssoftware eine Beschreibung von Funktionen bzw. der Funktionen der Echtzeitcomputeranwendung, insbesondere der umfangreichen Echtzeitcomputeranwendung, enthält, auf einem verteilten Echtzeit-Computersystem, welches Echtzeit-Computersystem eine Vielzahl von Sensoren, Aktuatoren, Knotenrechnern und Verteilereinheiten umfasst, und wobei die Sensoren, Aktuatoren, Knotenrechner und Verteilereinheiten Zugriff auf eine globale Zeit haben,
**dadurch gekennzeichnet, dass**
die Anwendungssoftware in eine Anzahl von Echtzeitsoftwarekomponenten EZSWK, insbesondere in mehrere Echtzeitsoftwarekomponenten EZSWK, unterteilt ist, wobei bei der Ausführung der Echtzeitcomputeranwendung bzw. der Anwendungssoftware die EZSWK mittels zeitgesteuerter Nachrichten Informationen austauschen können, und wobei jeder EZSWK eine Time-Triggered Virtual Machine TTVM zugeteilt ist, wobei von einem auf einem Knotenrechner laufenden Betriebssystem während eines periodischen Service Intervalls SI, dessen a priori festgelegte Beginn- und Endzeitpunkte mit der globalen Zeit synchronisiert sind, einer auf diesem Knotenrechner realisierten TTVM der geschützte Zugriff auf die dieser TTVM zugewiesenen Netzwerkressourcen und Speicherressourcen des Knotenrechners ermöglicht wird, und wobei während des SI der TTVM von dem Betriebssystem des Knotenrechners eine definierte Rechenleistung zur Abarbeitung der in der TTVM laufenden EZSWK derart zugeteilt wird, dass die EZSWK vor dem Ende des SI ein Ergebnis bereit stellen kann.

3. Verfahren nach Anspruch 1 oder 2, **dadurch gekennzeichnet, dass** eine TTVM am a priori festgelegten periodischen Beginnzeitpunkt eines SI die Eingabedaten einer EZSWK in Form von zeitgesteuerter Zustandsdaten im Datenbereich der EZSWK bereit stellt und am Ende des SI die Ausgabedaten der EZSWK in der Form von zeitgesteuerter Zustandsdaten aus dem Datenbereich der EZSWK übernimmt.

4. Verfahren nach einem der Ansprüche 1 bis 3, **dadurch gekennzeichnet, dass** auf einem Knotenrechner gleichzeitig mehrere TTVM realisiert werden.

5. Verfahren nach einem der Ansprüche 1 bis 4, **dadurch gekennzeichnet, dass** in einem Echtzeitcomputersystem, insbesondere umfangreichen Echtzeitcomputersystem, eine Vielzahl von Frames mit unterschiedlichen Frame-Dauern realisiert werden.

6. Verfahren nach Anspruch 5, **dadurch gekennzeichnet, dass** die Frame-Dauern einer Zweierpotenz der kleinsten Frame-Dauer entsprechen.

7. Verfahren nach einem der Ansprüche 1 bis 6, **dadurch gekennzeichnet, dass** das Betriebssystem eines Knotenrechners die Zugriffsrechte einer TTVM mit den Zugriffsanforderungen der auf der TTVM laufenden EZSWK vergleicht, um Security Fehler zu erkennen.

8. Verfahren nach einem der Ansprüche 1 bis 7, **dadurch gekennzeichnet, dass** ein Kommunikationssystem des Echtzeitcomputersystems oder ein Betriebssystem eines Knotenrechners zu einem a priori geplanten Umschaltzeitpunkt die laufende Version einer EZSWK deaktiviert und eine neue Version einer EZSWK auf einer anderen TTVM aktiviert und mit Kommunikationsdaten versorgt.

9. Verfahren nach einem der Ansprüche 1 bis 8, **dadurch gekennzeichnet, dass** zwei gleiche, d.h. identische, EZSWK auf zwei unabhängigen fail-silent TTVM ablaufen.

10. Verfahren nach einem der Ansprüche 1 bis 8, **dadurch gekennzeichnet, dass** drei gleiche, d.h. identische, EZSWK auf drei unabhängigen TTVM ablaufen und eine empfangende d.h. drei Kopien einer Nachrichten empfangende, TTVM mittels *Majority Voting* fehlerhafte Nachrichten maskiert.

11. Verfahren nach einem der Ansprüche 1 bis 10, **dadurch gekennzeichnet, dass** ein oder mehrere Knotenrechner jeweils über zwei oder mehrere Prozessoren verfügen, und wobei eine EZSWK auf zwei oder mehreren Prozessoren eines Knotenrechners parallel ausgeführt wird, wobei vorzugsweise die TTVM die EZSWK auf die zur Verfügung stehenden Prozessoren des Knotenrechners aufteilt, sodass die Rechenzeit für die EZSWK reduziert werden kann.

12. Verfahren nach einem der Ansprüche 1 bis 11, **dadurch gekennzeichnet, dass** ein Zeitintervall zwischen dem Sendezeitpunkt und dem Empfangszeitpunkt einer Nachricht mindestens so lange gewählt ist, dass eine in diesem Zeitintervall spezifizierte Echtzeitnachricht vom Sender zum Empfänger transportieren kann (Minimalintervall), wobei vorzugsweise vorgesehen ist, dass dieses Zeitintervall länger ist als dieses Minimalintervall, um die Flexibilität des Kommunikationssystem erhöhen.

13. Knotenrechner für ein verteiltes Echtzeit-Computersystem, welches Echtzeit-Computersystem eine Vielzahl von Sensoren, Aktuatoren, Knotenrechnern und Verteilereinheiten umfasst, und wobei die Sensoren, Aktuatoren, Knotenrechner und Verteilereinheiten Zugriff auf eine globale Zeit haben, wobei auf dem Echtzeit-Computersystem eine Echtzeitcomputeranwendung, insbesondere eine umfangreiche Echtzeitcomputeranwendung, bzw. eine Anwendungssoftware ausgeführt wird, wobei eine Anwendungssoftware bzw. die Anwendungssoftware eine Beschreibung von Funktionen bzw. der Funktionen der Echtzeitcomputeranwendung enthält,
**dadurch gekennzeichnet, dass**
auf dem Knotenrechner eine oder mehrere TTVM zur Ausführung von Echtzeitsoftwarekomponenten (EZSWK), in welche EZSWK's die Anwendungssoftware unterteilt ist, realisiert ist bzw. sind, wobei bei einer Ausführung der Echtzeitcomputeranwendung bzw. der Anwendungssoftware die EZSWK mittels zeitgesteuerter Nachrichten Informationen austauschen können, und wobei auf einem auf dem Knotenrechner laufenden Betriebssystem während eines periodischen Service Intervalls SI, dessen a priori festgelegte Beginn- und Endzeitpunkte mit der globalen Zeit synchronisiert sind, einer auf diesem Knotenrechner realisierten TTVM der geschützte Zugriff auf die dieser TTVM zugewiesenen Netzwerkressourcen und Speicherressourcen des Knotenrechners ermöglicht wird, und wobei während des SI der TTVM von dem Betriebssystem des Knotenrechners eine definierte Rechenleistung zur Abarbeitung der in der TTVM laufenden EZSWK derart zugeteilt wird, dass die EZSWK vor dem Ende des SI ein Ergebnis bereit stellen kann.

14. Echtzeit-Computersystem umfassend eine Vielzahl von Sensoren, Aktuatoren, Knotenrechnern und Verteilereinheiten, wobei die Sensoren, Aktuatoren, Knotenrechner und Verteilereinheiten Zugriff auf eine globale Zeit haben, wobei auf dem Echtzeit-Computersystem eine Echtzeitcomputeranwendung, insbesondere eine umfangreiche Echtzeitcomputeranwendung, ausgeführt wird,
**dadurch gekennzeichnet, dass**
einer, mehreren oder alle Knotenrechner als Knotenrechner nach Anspruch 13 ausgebildet ist/ sind.
